# EUROPEAN PATENT APPLICATION

(11) **EP 4 394 972 A1**
(43) Date of publication of application: **03.07.2024**
(21) Application number: 22958960.1
(22) Date of filing: 29.12.2022
(51) Int. Cl.: H01M 10/0525, H01M 4/133

(54) **SECONDARY BATTERY AND ELECTRIC DEVICE**

(30) Priority: 27.10.2022 CN 202211327819
(71) Applicant: Sunwoda Electric Vehicle Battery Co., Ltd., Shenzhen, Guangdong 518107 (CN)
(72) Inventor: ZHANG, Yao, Shenzhen, Guangdong 518107 (CN); WANG, Mingwang, Shenzhen, Guangdong 518107 (CN); ZHANG, Xuhui, Shenzhen, Guangdong 518107 (CN); WANG, Baoyu, Shenzhen, Guangdong 518107 (CN); CHEN, Hui, Shenzhen, Guangdong 518107 (CN)
(74) Representative: Stöckeler, Ferdinand
(86) International application number: PCT/CN2022/143654
(87) International publication number: WO 2024/087383

(57) **Abstract**

A secondary battery and an electrical device are disclosed. The secondary battery includes: a positive electrode plate including both a positive current collector and a positive active material layer disposed on the positive current collector; and a negative electrode plate including both a negative current collector and a negative active material layer disposed on the negative current collector; where the secondary battery satisfies: 0.5≤(σ₁/σ₂)/CB≤9.4. The present application balances rates of deintercalating lithium of the positive electrode plate and the negative electrode plate by defining a relationship between a surface density and a Cell Balance (CB) value, so as to prevent the secondary battery from lithium plating or from decreasing the capacity during its operation, thereby increasing the life of the secondary battery.

## Description

The present application claims priority to Chinese Patent Application No. 202211327819.X, filed with the Chinese Patent Office on October 27, 2022, entitled "SECONDARY BATTERY AND ELECTRICAL DEVICE", the disclosure of which is incorporated herein by reference in its entirety.

### TECHNICAL FIELD

The present application relates to the field of battery technologies, and more particularly, to a secondary battery and an electrical device.

### BACKGROUND

**A** lithium-ion battery has great advantages in the field of energy storage, but there are still some problems in a practical application of the battery. A lithium iron phosphate battery is taken as an example, the service life of a Lithium iron phosphate cell is the number of cycles of 4000-6000, and thus it is difficult to meet a requirement of the service life of 20-30 years of an energy storage project (which needs the number of cycles of more than 10,000), and the loss of active lithium is the main factor of attenuation of the service life of the lithium ion battery. In the process of deintercalating lithium of the battery cycle, an Solid Electrolyte Interphase (SEI) film is broken and formed due to the expansion and contraction of graphite, the dissolution of the positive transition metal, and the like, the area and thickness of the SEI film are increased, the limited active lithium in a battery system is consumed, and finally the service life of the battery is shortened thereby. How to reduce consumption of the active lithium and supplement the active lithium in the process of battery attenuation is a key problem in increasing the service life of the lithium iron phosphate battery.

In order to solve such a problem, it is common to perform "lithium supplement" on the negative electrode, which can be divided into physical lithium supplement and electrochemical lithium supplement depending on various lithium supplement methods. However, physical lithium supplement easily causes battery lithium plating in a subsequent cycle, resulting in short-circuit and potential safety hazard of the battery. Electrochemical lithium supplement can compensate for disadvantages of the physical lithium supplement, but a current method of the electrochemical lithium supplement has a less efficiency or cumbersome processes or a high cost, and thus the electrochemical lithium supplement is not suitable for practical production and popularization. In addition, researchers have also selected a graphite having a specific performance index, such as a small specific surface area, a narrow particle size distribution, a surface coating modification, and the like, as a negative electrode, and selected an electrolyte having good infiltration performance at a normal temperature and a high temperature, and at the same time, adopted a suitable battery formula design to alleviate expansion and contraction of graphite volume during a cycle process, reduce the specific surface area of graphite, reduce the consumption of the active lithium during failure and generation of the SEI film, and prolong the service life of the lithium iron phosphate battery as long as possible.

Therefore, there is a need to develop a secondary battery that has an extremely long cycle life and excellent electrochemical performance, is easy to process and manufacture, and has a lower use cost.

### SUMMARY

### Technical problem

It is an object of the present application to provide a secondary battery that balances rates of deintercalating lithium of a positive electrode plate and a negative electrode plate by defining a relationship between a surface density and a Cell Balance (CB) value, so as to prevent the secondary battery from lithium plating or from decreasing the capacity of the secondary battery during operation of the secondary battery, thereby increasing the life of the secondary battery.

### Solution to Problem

### Technical Solution

In a first aspect, an embodiment of the present application provides a secondary battery, including: a positive electrode plate including a positive current collector and a positive active material layer disposed on the positive current collector; and a negative electrode plate including a negative current collector and a negative active material layer disposed on the negative current collector; where the secondary battery satisfies: 0.5≤ (σ₁/σ₂)/CB≤9.4;
where σ₁ is a surface density of the positive active material layer in a unit of g/m²;
σ₂ is a surface density of the negative active material layer in a unit of g/m²; and
the CB is a ratio of the capacity of the negative electrode plate per unit area to the capacity of the positive electrode plate per unit area.

In some embodiments, 140≤σ₁/CB≤750.

In some embodiments, 75≤σ₂/CB≤360.

In some embodiments, 0.8≤CB≤1.1.

In some embodiments, the surface density σ₁ of the positive active material layer satisfies: 150 g/m²≤σ₁≤600 g/m².

In some embodiments, the surface density σ₂ of the positive active material layer satisfies: 80 g/m²≤σ₂≤290 g/m².

In some embodiments, the secondary battery satisfies: 5≤σ₁/a≤20, where a is a porosity of the positive active material layer in a unit of %.

In some embodiments, 28%≤a≤32%.

In some embodiments, the secondary battery satisfies: 2.5≤σ₂/b≤9.1, where b is a porosity of the negative active material layer in a unit of %.

In some embodiments, 30%≤b≤38%.

In some embodiments, 1.0≤(σ₁/σ₂)/CB≤6.0.

In some embodiments, 2.0≤(σ₁/σ₂)/CB≤3.0.

In some embodiments, a positive active material of the positive electrode plate includes one or more of lithium iron phosphate, lithium cobalt oxide, lithium nickel oxide, or lithium manganese oxide.

In some embodiments, a negative active material of the negative electrode plate includes one or more of artificial graphite, natural graphite, amorphous carbon, a carbon nanotube, or mesocarbon microbead.

In a second aspect, an embodiment of the present disclosure provides an electrical device, including any of the secondary batteries described above. The secondary battery serves as a power supply for the electrical device.

### Advantageous effect of present disclosure

### Advantageous effect

Compared with the prior art, the secondary battery of the present application includes: the positive electrode plate including the positive current collector and the positive active material layer disposed on the positive current collector; and the negative electrode plate including the negative current collector and the negative active material layer disposed on the negative current collector; where the secondary battery satisfies: 0.5≤(σ₁/σ₂)/CB≤9.4. On the premise of ensuring a lithium surplus design in the positive electrode, the present application can balance the rates of deintercalating lithium of the positive electrode plate and the negative electrode plate, prevent the secondary battery from lithium plating or from decreasing the capacity of the secondary battery during operation of the secondary battery, and increase the life of the secondary battery.

### EMBODIMENTS OF INVENTION

### DETAILED DESCRIPTION

The present application provides a secondary battery and an electrical device, to make the objectives, technical solutions, and effects of the present application more clear and definite, the present application is illustrated in detail below by illustrating the embodiments. It should be understood that the specific embodiments described here are only used to explain the present application, and are not used to limit the present application.

### Secondary battery

An embodiment of the present application provides a secondary battery, including: a positive electrode plate including a positive current collector and a positive active material layer disposed on the positive current collector; and a negative electrode plate including a negative current collector and a negative active material layer disposed on the negative current collector; where the secondary battery satisfies: 0.5≤(σ₁/σ₂)/CB≤9.4; where σ₁ is a surface density of the positive active material layer in a unit of g/m²; σ₂ is a surface density of the negative active material layer in a unit of g/m²; and the CB is a ratio of the capacity of the negative electrode plate per unit area to the capacity of the positive electrode plate per unit area.

When gram capacities of the positive and negative electrode materials are constant, the higher surface densities of the positive and negative active materials, the higher reversible capacities of the positive and negative electrode plates, therefore, σ₁/σ₂ is related to the design CB value of the secondary battery, at the same time, the rates of deintercalating lithium of the positive electrode plate and the negative electrode plate has a certain relationship with the surface densities of the positive and negative electrode plates. The greater coating surface densities of the positive and negative electrode plates, the greater the polarization of the system, the greater the resistance of deintercalating lithium, and the slower the rates of deintercalating lithium.

By defining the (σ₁/σ₂)/CB to ensure the lithium surplus design in the positive electrode in the present application, there are enough lithium to supplement the active lithium loss during the operation of the secondary battery. At the same time, the rates of deintercalating lithium of the positive electrode plate and the negative electrode plate are balanced to prevent the secondary battery from lithium plating or from decreasing the capacity of the secondary battery during operation of the secondary battery, thereby increasing the cycle life of the secondary battery. When (σ₁/σ₂)/CB<0.5, the negative electrode has a relatively large coating weight, the rates of deintercalating lithium become slow, the risk of lithium plating of the secondary battery system is increased, the side reaction is increased, and attenuation of the lifetime is accelerated. When (σ₁/σ₂)/CB>9.4, the positive electrode plate has a relatively large coating weight, the polarization of the positive electrode is increased, the rates of deintercalating lithium become slow, the lithium ions are not sufficiently separated during charging at a high rate, a low capacity occurs in the secondary battery, and an energy density of the secondary battery is decreased.

**In** some embodiments, 1.0≤(σ₁/σ₂)/CB≤6.0.

In some embodiments, 2.0≤(σ₁/σ₂)/CB≤3.0.

On the basis of ensuring the improvement of the cycle life of the secondary battery, the present application improves the energy efficiency and energy density of the secondary battery by further optimizing the collocation of the positive and negative electrode surface density and CB.

**In** some embodiments, a value of (σ₁/σ₂)/CB is any one of 0.5, 0.8, 1.0, 1.1, 1.3, 1.5, 1.7, 2.0, 1.3, 1.5, 1.7, 2.0, 2.2, 2.5, 2.83.0, 3.3, 3.5, 3.8, 4.0, 4.3, 4.5, 4.8, 5.0, 5.3, 5.5, 5.8, 6.0, 6.5, 7.0, 7.5, 8.0, 8.5, 8.7, 9.0, 9.4, or in a range between any two values thereamong.

In some embodiments, unit areas of the positive and negative electrode plates are equal when the CB value is calculated.

In some embodiments, a capacity of the negative electrode plate per unit area is a charging capacity of the negative electrode plate per unit area.

In some embodiments, a capacity of the positive electrode plate per unit area is a discharging gram capacity of the positive electrode plate per unit area.

In some embodiments, the CB value is obtained by a following test method.

A test method of a capacity of the negative electrode plate per unit area is such that a surface of the negative electrode plate per unit area retains an active substance layer and is assembled into a button battery with a lithium plate, a separation film, and an electrolyte, and a voltage of the battery is discharged to 0.005V at 0.1C, discharged to 0.005 V at 0.05 mA, discharged to 0.005 V at 0.02 mA, and charged to 2 V at 0.1C, and a resulting charging capacity is the capacity of the negative electrode plate per unit area.

A test method of a capacity of the positive electrode plate per unit area is such that a surface of the positive electrode plate per unit area retains an active substance layer and is assembled into a button battery with a lithium plate, a separation film, and an electrolyte, and a voltage of the battery is charged to 3.7 V at 0.1C, charged to 50 µA at a constant voltage, and discharged to 2.0 V at 0.1C, and a resulting discharge capacity is the capacity of the positive electrode plate per unit area.

**In** some embodiments, 140≤σ₁/CB≤750.

The secondary battery further defines a range of σ₁/CB, so that the energy density of the secondary battery can be increased while ensuring the process ability of the secondary battery.

**In** some embodiments, a value of σ₁/CB is any one of 140, 150, 180, 200, 230, 250, 270, 290, 300, 320, 330, 340, 350, 370, 380, 390, 400, 420, 430, 450, 470, 480, 500, 520, 530, 540, 550, 560, 580, 600, 630, 650, 680, 700, 750, or in a range between any two values thereamong.

**In** some embodiments, 75≤σ₂/CB≤360.

In some embodiments, a value of σ₂/CB is any one of 75, 80, 85, 90, 95, 100, 105, 110, 115, 120, 125, 130, 135, 140, 145, 150, 155, 160, 165, 170, 175, 180, 185, 190, 195, 200, 205, 210, 215, 220, 225, 230, 235, 240, 245, 250, 255, 260, 265, 270, 275, 280, 285, 290, 295, 300, 305, 310, 315, 320, 325, 330, 335, 340, 345, 350, 355, 360, or in a range between any two values thereamong.

The secondary battery further defines a range of σ₂/CB, so that the energy density of the secondary battery can be increased while ensuring the process ability of the secondary battery.

**In** some embodiments, a range of CB is 0.8≤CB≤1.1.

The present application can increase the reversible capacity of the positive electrode plate of the battery with the lithium surplus design in the positive electrode. By controlling a charging strategy in an operation process of the battery, a constant volume charging method enables a portion of lithium ions to be released from the positive electrode plate, and excess lithium ions are used as a reserve to supplement active lithium loss in the operation process of the secondary battery, so that the content of the active lithium is always in a proper range, and the storage capacity recovery rate and energy efficiency of the secondary battery are improved.

In some embodiments, the CB value is any one of 0.8, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, 1.0, 1.01, 1.02, 1.03, 1.04, 1.05, 1.06, 1.07, 1.08, 1.09, 1.1, or in a range between any two values thereamong.

A method for testing the surface density is such that a positive electrode plate or a negative electrode plate having an area of S m² is taken and weighed to obtain a weight of mi g, and the positive active material layer or the negative active material layer on both sides of the electrode plate is scraped off to obtain a foil material. When the foil material is weighed to obtain a weight of m₂ g, the surface density of the electrode plate is (m₁-m₂)/S g/m².

In some embodiments, the surface density σ₁ of the positive active material layer satisfies: 150 g/m²≤σ₁≤600 g/m².

In some embodiments, a value of σ₁ (in an unit of g/m²) is any one of 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500, 510, 520, 530, 540, 550, 560, 570, 580, 590, 600, 610, 620, 630, 640, 650, 660, 670, 680, 690, 700, or in a range between any two values thereamong.

In some embodiments, the surface density σ₂ of the negative active material layer satisfies: 80 g/m²≤σ₂≤290 g/m².

In some embodiments, a value of σ₂ (in an unit of g/m²) is any one of 80, 90, 100, 110, 120, 130, 140, 150, 160, 170, 180, 190, 200, 210, 220, 230, 240, 250, 260, 270, 280, 290, or in a range between any two values thereamong.

On the basis of ensuring the process ability of the positive electrode plate, the present application further improves the energy density of the secondary battery by defining the surface densities of the positive active material layer and the negative active material layer and matches the rate of deintercalating lithium of the positive electrode or the negative electrode, thereby improving the cycle life of the secondary battery.

In some embodiments, the secondary battery satisfies: 5≤σ₁/a≤20, where a is a porosity of the positive active material layer in a unit of %.

The rate of deintercalating lithium of the positive electrode plate is negatively correlated with the surface density of the positive electrode plate and positively correlated with the porosity of the positive electrode plate. The present application can control the rate of deintercalating lithium of the positive electrode plate to reach a certain balance alone with the rate of deintercalating lithium of the negative electrode plate by defining the σ₁/a , thereby preventing the secondary battery from lithium plating due to unbalanced rates of the deintercalating lithium of the positive and negative electrode plates during the operation of the secondary battery, and ensuring the improvement of the cycle life of the secondary battery.

In some embodiments, a value of σ₁/a is any one of 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.4, 12.5, 12.6, 12.7, 12.8, 12.9, 13.0, 13.1, 13.2, 13.3, 13.4, 13.5, 13.6, 13.7, 13.8, 13.9, 14.0, 14.1, 14.2, 14.3, 14.4, 14.5, 14.6, 14.7, 14.8, 14.9, 15.0, 15.1, 15.2, 15.3, 15.4, 15.5, 15.6, 15.7, 15.8, 15.9, 16.0, 16.1, 16.2, 16.3, 16.4, 16.5, 16.6, 16.7, 16.8, 16.9, 17.0, 17.1, 17.2, 17.3, 17.4, 17.5, 17.6, 17.7, 17.8, 17.9, 18.0, 18.1, 18.2, 18.3, 18.4, 18.5, 18.6, 18.7, 18.8, 18.9, 19.0, 19.1, 19.2, 19.3, 19.4, 19.5, 19.6, 19.7, 19.8, 19.9, 20.0, or in a range between any two values thereamong.

**In** some embodiments, 28%≤a≤32%.

The rate of deintercalating lithium of the positive electrode plate is positively correlated with the porosity of the positive electrode plate. The present application can control the rate of deintercalating lithium of the positive electrode plate to reach a certain balance alone with the rate of deintercalating lithium of the negative electrode plate by defining the porosity a of the positive electrode plate, thereby preventing the secondary battery from lithium plating due to unbalanced rates of the deintercalating lithium of the positive and negative electrode plates during the operation of the secondary battery, and ensuring the improvement of the cycle life of the secondary battery.

In some embodiments, a value of a (in an unit of %) is any one of 28.0, 28.1, 28.2, 28.3, 28.4, 28.5, 28.6, 28.7, 28.8, 28.9, 29.0, 29.1, 29.2, 29.3, 29.4, 29.5, 29.6, 29.7, 29.8, 29.9, 30.0, 30.1, 30.2, 30.3, 30.4, 30.5, 30.6, 30.7, 30.8, 30.9, 31.0, 31.1, 31.2, 31.3, 31.4, 31.5, 31.6, 31.7, 31.8, 31.9, 32.0, or in a range between any two values thereamong.

In some embodiments, 2.5≤σ₂/b≤9.1, where b is a porosity of the negative active material layer in a unit of %.

The rate of deintercalating lithium of the negative electrode plate is negatively correlated with the surface density of the negative electrode plate and positively correlated with the porosity of the negative electrode plate. Definition of the σ₂/b is mainly control the rate of deintercalating lithium of the negative electrode plate to reach a certain balance alone with the rate of deintercalating lithium of the positive electrode plate, thereby preventing the secondary battery from lithium plating due to unbalanced rates of the deintercalating lithium of the positive and negative electrode plates during the operation of the secondary battery, and ensuring the improvement of the cycle life of the secondary battery.

In some embodiments, a value of the σ₂/b is any one of 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, or in a range between any two values thereamong.

In some embodiments, 30%≤b≤38%.

The rate of deintercalating lithium of the negative electrode plate is positively correlated with the porosity of the negative electrode plate. The present application can control the rate of deintercalating lithium of the negative electrode plate to reach a certain balance alone with the rate of deintercalating lithium of the positive electrode plate by defining the porosity b of the negative electrode plate, thereby preventing the secondary battery from lithium plating due to unbalanced rates of the deintercalating lithium of the positive and negative electrode plates during the operation of the secondary battery, and ensuring the improvement of the cycle life of the secondary battery.

In some embodiments, a value of the b (in an unit of %) is any one of 30.0, 30.1, 30.2, 30.3, 30.4, 30.5, 30.6, 30.7, 30.8, 30.9, 31.0, 31.1, 31.2, 31.3, 31.4, 31.5, 31.6, 31.7, 31.8, 31.9, 32.0, 32.1, 32.2, 32.3, 32.4, 32.5, 32.6, 32.7, 32.8, 32.9, 33.0, 33.1, 33.2, 33.3, 33.4, 33.5, 33.6, 33.7, 33.8, 33.9, 34.0, 34.1, 34.2, 34.3, 34.4, 34.5, 34.6, 34.7, 34.8, 34.9, 35.0, 35.1, 35.2, 35.3, 35.4, 35.5, 35.6, 35.7, 35.8, 35.9, 36.0, 36.1, 36.2, 36.3, 36.4, 36.5, 36.6, 36.7, 36.8, 36.9, 37.0, 37.1, 37.2, 37.3, 37.4, 37.5, 37.6, 37.7, 37.8, 37.9, 38.0, or in a range between any two values thereamong.

In the present application, both the surface density and the porosity can be determined by existing measuring methods.

In some embodiments, the surface density of the positive active material layer is determined by measuring a weight (g) of the positive electrode plate having a specific area (S₁, in an unit of m²) and subtracting a weight (g) of the positive current collector from the weight (g) of the positive electrode plate to obtain a coating weight (g) of the positive active material layer, and dividing the coating weight by the area S₁ of the positive electrode plate to obtain the surface density σ₁ (in an unit of g/m²) of the positive active material layer.

In some embodiments, the surface density of the negative active material layer is determined by measuring a weight (g) of the negative electrode plate having a specific area (S₂, in an unit of m²) and subtracting a weight (g) of the negative current collector from the weight (g) of the negative electrode plate to obtain a coating weight (g) of the negative active material layer, and dividing the coating weight by the area S₂ of the negative electrode plate to obtain the surface density σ₂ (in an unit of g/m²) of the negative active material layer.

In some embodiments, the porosity of the positive active material layer and the porosity of the negative active material layer are measured by a mercury intrusion method.

### Positive electrode plate

In some embodiments, the positive electrode plate includes a positive current collector and a positive active material disposed on the positive current collector.

In some embodiments, the positive active material includes one or more of lithium iron phosphate, lithium cobalt oxide, lithium nickel oxide, or lithium manganese oxide.

In some embodiments, the positive active material is the lithium iron phosphate, the lithium cobalt oxide, the lithium nickel oxide, or the lithium manganese oxide, and a preparation method of the positive active material belongs to the prior art, and the preparation methods that can be exemplified are a high temperature solid phase method, a carbothermal reduction method, a spray drying method, a template method, or a hydrothermal synthesis method.

In a specific implementation, the lithium iron phosphate of the positive active material can be prepared by mixing a lithium source (Li₂CO₃), an iron source (FePO₄), and a carbon source, and then pretreating the mixture at 300-500°C, and then sintering the mixture at 600-850°C to prepare the lithium iron phosphate as the positive electrode active material.

In some embodiments, the positive active material is the lithium cobalt oxide, and a preparation method of the positive active material belongs to the prior art, and the preparation methods that can be exemplified are a high temperature solid phase method, a sol-gel method, and the like.

In a specific implementation, the lithium cobalt oxide of the positive active material can be prepared by mixing and grinding a lithium source (Li₂CO₃), a cobalt source (Co₃O₄), and ethyl alcohol, pretreating the mixture at 300°C, followed by sintering the mixture at 600°C, and performing a solid-phase reaction for the mixture at 800°C to obtain the lithium cobalt oxide.

In some embodiments, the positive electrode plate further includes a conductive agent and an adhesive. The kinds and contents of the conductive agent and the adhesive are not specifically limited, and may be selected according to actual requirements. In some embodiments, the conductive agent may include conductive carbon black, a carbon nanotube, graphene, and the like, and the adhesive may include polyvinylidene fluoride.

In some embodiments, preparation of the positive electrode plate includes dispersing the above-mentioned positive active material or a positive active material obtained by the above-mentioned methods, the conductive agent, and the adhesive in a certain proportion in a solvent of N-methylpyrrolidone (NMP), uniformly stirring them, coating a resulting paste on an aluminum foil, and forming the positive electrode plate by performing various processes such as rolling, separating, and cutting on the foil. By varying rolling parameters, the corresponding properties and parameters of the positive electrode plate can also be controlled. The positive active material layer of the present application can be controlled to satisfy the above-mentioned features.

### Negative electrode plate

In some embodiments, the negative electrode plate includes a negative current collector, and all of a negative active material, an adhesive, and a conductive agent disposed on the negative current collector. The kinds and contents of the negative active material, the adhesive, and the conductive agent are not specifically limited, and may be selected according to actual requirements. In some embodiments, the negative active material includes one or more of artificial graphite, natural graphite, amorphous carbon, a carbon nanotube, or mesocarbon microbeads.

### Electrolyte

**In** some embodiments, main components of the electrolyte include a lithium salt, an organic solvent, and an additive. The kinds and composition of the lithium salt and the organic solvent are not particularly limited, and can be selected according to actual requirements. The lithium salt may include lithium hexafluorophosphate, lithium bisfluorosulfonimide, and the like. The solvent may include vinyl carbonate, ethyl methyl carbonate, dimethyl carbonate, propyl propionate, and the like. The additive may include lithium difluorophosphate, lithium bisoxalate borate, and succinonitrile, and the like.

### Separation film

In some embodiments, the kinds of the separation film are not particularly limited, and may be selected according to actual requirements. The separation film may be a polypropylene film, a polyethylene film, a polyvinylidene fluoride film, a spandex film, an aramid film, or a multilayer composite film modified by a coating.

In some embodiments, the preparation of the secondary battery includes: stacking the positive electrode plate, the separation film, and the negative electrode plate in sequence so that the separation film is disposed between the positive electrode plate and the negative electrode plate for separation, then winding an assembly of the positive electrode plate, the separation film, and the negative electrode plate that are stacked into a square-shaped nude cell to load the cell into a battery case, and then baking the cell at 65-95°C for removal of the water, injecting the electrolyte into the case and sealing the case, and performing standing, hot and cold pressing, formation, fixture, capacity grading, and the like for the case to obtain the secondary battery.

In some embodiments, the preparation of the secondary battery includes:
**(1)** mixing a lithium iron phosphate, a positive conductive agent, a positive adhesive, and a positive solvent to prepare a positive paste and coating the positive paste on a surface of a positive current collector to obtain a positive electrode plate;
(2) mixing graphite, a negative dispersant, a negative conductive agent, a negative adhesive, and a negative solvent to prepare a negative paste and coating the negative paste on a surface of a negative current collector to obtain a negative electrode plate; and
(3) assembling the positive electrode plate and the negative electrode plate prepared in the present application and a separation film, and other battery parts in a preparation process of the lithium ion battery, and performing shaping, baking, packaging, liquid injection, formation, capacity grading, and the like for the assembly to obtain a long-life lithium iron phosphate lithium ion battery, where types of the battery include a pouch battery, a cylindrical battery, an aluminum-shell battery and the like. A design CB value of the battery satisfies 0.8≤CB≤1.1, i.e., a ratio of reversible capacity of the negative electrode plate of the battery to a reversible capacity of the positive electrode plate of the battery is between 0.8-1.10, and satisfies: 0.5≤(σ₁/σ₂)/CB≤9.4.

In some embodiments, various types of secondary batteries include pouch batteries, cylindrical batteries, aluminum-shell batteries, and the like.

### Electrical device

The electrical device of the present application includes any of the secondary batteries described above.

In some embodiments, the electrical device of the present application is, but not limited to, a backup power supply, an electric motor, an electric automobile, an electric motorcycle, a booster bicycle, a bicycle, an electric tool, a large battery for household, and the like.

### Example 1

A method for preparing a positive electrode plate is performed by: mixing lithium iron phosphate, conductive carbon black, i.e., super pll (SP), and polyvinylidene difluoride (PVDF) in a mass ratio of 97: 0.7: 2.3, then adding the mixture into the NMP to mix the mixture well, and coating the mixture onto two surfaces of a carbon-coated aluminum foil having (12+1+1) µm, and then baking, rolling, stripping, and cutting the electrode plate to obtain a positive electrode plate.

A method for preparing a negative electrode plate is performed by: mixing graphite, conductive carbon black, i.e., super pll (SP), carboxymethylcellulose (CMC), and styrene butadiene rubber (SBR) in a mass ratio of 96.3: 0.7: 1.1: 1.9, then adding the mixture into the water to mix the mixture well, and coating the mixture onto two surfaces of a copper foil having 6 µm, and then baking, rolling, stripping, and cutting the electrode plate to obtain a negative electrode plate.

### Separation film: polyethylene film;

Electrolyte is prepared by mixing vinyl carbonate, ethyl methyl carbonate, and dimethyl carbonate of the organic solvents in a volume ratio of 1: 1: 1. In an argon atmosphere glovebox having a water content of <10ppm, lithium hexafluorophosphate, which has been sufficiently dried, is dissolved in the organic solvents at a content of 1 mol/L and mixed uniformly to obtain the electrolyte.

The positive electrode plate, the negative electrode plate, the separation film, and other battery parts prepared in the present application are assembled in the preparation process of the lithium ion battery, and shaping, baking, packaging, liquid injection, formation, capacity grading, and the like are performed for the assembly to obtain a long-life lithium iron phosphate lithium ion battery, where a type of the battery is a square-shell battery.

Examples 2-14 and Comparative Examples 1-2 are prepared according to the method of Example 1, except for the coating amount of the active material and the thickness of the active material layer of the electrode plate. The coating amount of the active material and the thickness of the active material layer of the electrode plate are adjusted to obtain the desired design CB value and surface density, and parameters of the prepared battery is shown as following Table 1.

### Performance test for the battery

Cycle capacity retention ratio: a nominal capacity of the secondary battery is Ci, and a discharge capacity of C₂ is obtained under the number of cycles corresponding to the 1C/1C cycle at a certain temperature of 25°C, and the capacity retention ratio =C₂/C₁×100%.

Energy efficiency: a percentage of a ratio of the energy output when the lithium ion battery is discharged to the energy input when the lithium ion battery is previously charged.

Energy efficiency testing method:
**(1)** The secondary battery is charged to the nominal capacity of the battery at a constant current of 1C, i.e., the charging energy is E1.
(2) Standing for 30 min.
(3) The secondary battery is discharged to a lower limit of voltage of 2.5 V at a constant current of 1 C, i.e., the discharging capacity is E₂.
(4) An energy efficiency value of the secondary battery is E₂/E₁.

Storage capacity recovery rate testing method:
**(1)** At a normal temperature, the secondary battery is charged to a battery nominal capacity of X₁ Ah at a constant current of 1C.
**(2)** The secondary battery is transferred to an oven at 60°C for 400 days.
**(3)** At a normal temperature, the secondary battery is discharged to 2.5 V at a 1C.
(4) Standing for 30 min.
**(5)** At a normal temperature, the secondary battery is charged to 3.65 V at a constant current of 1C, until the current is 0.05C.
(6) Standing for 30 min.
**(7)** At a normal temperature, the secondary battery is discharged to 2.5 V at a constant current of 1C, i.e., a discharging capacity is X₂ Ah.
(8) A capacity recovery rate of the secondary battery is X₂/X₁.

Table 1 performance parameters of the secondary battery prepared in Examples 1-14 and Comparative Examples 1-2
[]

**[Table 1]**

| Number | Design CB value of Battery | σ₁ (g/m²) | σ₂ (g/m²) | (σ₁/σ₂)/CB | a (%) | b (%) | σ₁/a | σ₂/b |
|---|---|---|---|---|---|---|---|---|
| Example 1 | 0.8 | 600 | 80 | 9.4 | 30 | 32 | 20.0 | 2.5 |
| Example 2 | 0.85 | 520 | 115 | 5.3 | 30 | 32 | 17.3 | 3.6 |
| Example 3 | 0.9 | 440 | 150 | 3.3 | 30 | 32 | 14.7 | 4.7 |
| Example 4 | 0.95 | 360 | 185 | 2.0 | 30 | 32 | 12.0 | 5.8 |
| Example 5 | 1 | 280 | 220 | 1.3 | 30 | 32 | 9.3 | 6.9 |
| Example 6 | 1.05 | 200 | 255 | 0.7 | 30 | 32 | 6.7 | 8.0 |
| Example 7 | 1.1 | 150 | 290 | 0.5 | 30 | 32 | 5.0 | 9.1 |
| Comparative Example 1 | 0.7 | 610 | 70 | 12.4 | 30 | 32 | 20.3 | 2.2 |
| Comparative Example 2 | 1.2 | 140 | 300 | 0.4 | 30 | 32 | 4.7 | 9.4 |
| Example 8 | 0.95 | 360 | 185 | 2.0 | 28 | 30 | 12.9 | 6.2 |
| Example 9 | 0.95 | 360 | 185 | 2.0 | 29 | 32 | 12.4 | 5.8 |
| Example 10 | 0.95 | 360 | 185 | 2.0 | 30 | 34 | 12.0 | 5.4 |
| Example 11 | 0.95 | 360 | 185 | 2.0 | 31 | 36 | 11.6 | 5.1 |
| Example 12 | 0.95 | 360 | 185 | 2.0 | 32 | 38 | 11.3 | 4.9 |
| Example 13 | 0.95 | 360 | 185 | 2.0 | 27 | 29 | 13.3 | 6.4 |
| Example 14 | 0.95 | 360 | 185 | 2.0 | 33 | 39 | 10.9 | 4.7 |

Table 2 Test results in Examples 1-14 and Comparative Examples 1-2
[]

**[Table 2]**

| Number | Capacity retention rate of the secondary battery under the number of cycles of 6000 corresponding to the 1C/1C at 25°C | Capacity recovery rate of the secondary battery at 60°Cunder SOC of 100% for 600 days of storage | Energy efficiency of the secondary battery at 25°C under 1C/1C |
|---|---|---|---|
| Example 1 | 89.5% | 91.2% | 93.6% |
| Example 2 | 92.6% | 92.5% | 93.7% |
| Example 3 | 98.8% | 93.4% | 94.2% |
| Example 4 | 100.0% | 95.6% | 94.8% |
| Example 5 | 97.4% | 96.3% | 94.4% |
| Example 6 | 90.3% | 94.1% | 94.0% |
| Example 7 | 85.7% | 92.2% | 93.6% |
| Example 8 | 88.9% | 90.4% | 93.8% |
| Example 9 | 90.3% | 92.9% | 94.3% |
| Example 10 | 99.7% | 95.2% | 94.6% |
| Example 11 | 92.2% | 92.1 % | 94.5% |
| Example 12 | 87.6% | 91.3% | 93.8% |
| Example 13 | 83.6% | 90.0% | 93.4% |
| Example 14 | 82.1% | 89.3% | 93.3% |
| Comparative Example 1 | 80.6% | 88.4% | 93.1% |
| Comparative Example 2 | 75.2% | 87.7% | 92.7% |

As can be seen from Tables 1 and 2 that the present application defines the relationship between the surface densities of the positive and negative electrodes and the design CB value and performs definition of the porosity of the positive and negative electrode plates and their respective surface densities, so that the positive electrode surplus design is ensured, to enable sufficient lithium to supplement the active lithium loss during the operation of the secondary battery, and to balance the rates of deintercalating lithium of the positive and negative electrode plates, and to prevent the secondary battery from lithium plating and from decreasing the capacity of the secondary battery during the operation of the secondary battery. Therefore, the cycle, storage life, and energy efficiency of the secondary battery are significantly improved.

In Examples 1 to 7, the porosities a% and b% of the positive and negative electrode plates are 30% and 32%, respectively, and remain unchanged. However, with the increasing of (σ₁/σ₂)/CB and σ₁/a and the decreasing of σ₂/b, there is a tendency for the capacity retention rate of the secondary battery under the number of cycles of 6000 at 1C of charging of the battery and 1C of discharging the battery at 25°C, the storage capacity recovery rate of the secondary battery at 60°C, and the energy efficiency of the second battery at 25°C under at 1C of charging of the battery and 1C of discharging the battery to first increase and then decrease. Because (σ₁/σ₂)/CB is increased and the design CB value is decreased, the more sufficient the positive electrode surplus design amount, the more the active lithium can be supplemented during the operation of the secondary battery, thereby facilitating improvement of the cycle and storage life. However, when (σ₁/σ₂)/CB is increased, the surface density σ₁ of the positive electrode may be increased or the surface density σ₂ of the negative electrode may be decreased. As a result, the kinetics of the positive electrode is deteriorated or the kinetics of the negative electrode is improved, so that the rates of deintercalating lithium of the positive and negative electrode plates do not match. Therefore, when (σ₁/σ₂)/CB is increased to a certain extent, the cycle, storage life, and energy efficiency of the secondary battery begin to decrease.

In Examples 8-14, when the design CB value, σ₁, σ₂, and (σ₁/σ₂)/CB of the cell remains unchanged, with the increasing of a and b, and the decreasing of σ₁/a and σ₂/b, the capacity retention rate of the secondary battery under the number of cycles of 6000 at 1C of charging of the battery and 1C of discharging the battery at 25°C, the storage capacity recovery rate of the secondary battery at 60°C, and the energy efficiency of the secondary battery at 25°C under at 1C of charging of the battery and 1C of discharging the battery are first increased and then decreased mainly due to the increasing of a and b, the increasing of porosities of the positive and negative electrode plates, and improved kinetics of the positive and negative electrode plates of the secondary battery, thereby facilitating improvement of the cycle, the storage life, and the energy efficiency. However, when the porosities of the positive and negative electrode plates become larger and larger, the rates of deintercalating lithium of the positive and negative electrode plates may become mismatched, so that the secondary battery may plate lithium during the operation of the secondary battery. As a result, when a and b are increased to a certain extent, the cycle, the storage life, and the energy efficiency of the secondary battery begin to decrease.

In the foregoing embodiments, each is described with its own emphasis. A portion that is not described in detail in an embodiment may refer to related descriptions in another embodiment.

The secondary battery and the electronic device provided in the embodiments of the present application are described in detail above. A specific example is used herein to describe a principle and an implementation of the present application. The description of the foregoing embodiments is merely used to help understand a method and a core idea of the present application. In addition, a person skilled in the art may make changes in a specific implementation manner and an application scope according to an idea of the present application. In view of the foregoing, content of this specification should not be construed as a limitation on the present application.

## Claims

1. A secondary battery, comprising: a positive electrode plate including both a positive current collector and a positive active material layer disposed on the positive current collector; and a negative electrode plate including both a negative current collector and a negative active material layer disposed on the negative current collector;
wherein the secondary battery satisfies: 0.5≤ (σ₁/σ₂)/CB≤9.4;
wherein σ₁ is a surface density of the positive active material layer in a unit of g/m²;
σ₂ is a surface density of the negative active material layer in a unit of g/m²; and
the Cell balance (CB) is a ratio of the capacity of the negative electrode plate per unit area to the capacity of the positive electrode plate per unit area.

2. The secondary battery of claim 1, wherein 1.0≤(σ₁/σ₂)/CB≤6.0.

3. The secondary battery of claim 1, wherein 2.0≤(σ₁/σ₂)/CB≤3.0.

4. The secondary battery of any of claims 1-3, wherein 140≤σ₁/CB≤750.

5. The secondary battery of any of claims 1-3, wherein 75≤σ₂/CB≤360.

6. The secondary battery of any of claims 1-5, wherein 0.8≤CB≤1.1.

7. The secondary battery of any of claims 1-6, wherein
the secondary battery satisfies: 5≤σ₁/a≤20; and
a is a porosity of the positive active material layer in a unit of %.

8. The secondary battery of any of claims 1-7, wherein
the secondary battery satisfies: 2≤σ₂/b≤9; and
b is a porosity of the negative active material layer in a unit of %.

9. The secondary battery of any of claims 1-8, wherein the surface density σ₁ of the positive active material layer satisfies: 150≤σ₁≤600.

10. The secondary battery of any of claims 1-9, wherein the surface density σ₂ of the negative active material layer satisfies: 80 ≤σ₂≤290.

11. The secondary battery of any of claims 7-10, wherein 28%≤a≤32%.

12. The secondary battery of any of claims 8-11, wherein 30%≤b≤38%.

13. The secondary battery of any of claims 1-12, wherein a positive active material of the positive electrode plate includes one or more of lithium iron phosphate, lithium cobalt oxide, lithium nickel oxide, or lithium manganese oxide.

14. The secondary battery of any of claims 1-13, wherein a negative active material of the negative electrode plate includes one or more of artificial graphite, natural graphite, amorphous carbon, a carbon nanotube, or mesocarbon microbead.

15. An electrical device, comprising the secondary battery of any of claims 1-14.
